# EUROPÄISCHE PATENTSCHRIFT

(11) **EP 1 364 987 B1**
(45) Veröffentlichungstag und Bekanntmachung des Hinweises auf die Patenterteilung: **05.03.2008**
(21) Anmeldenummer: 02011447.6
(22) Anmeldetag: 24.05.2002
(51) Int. Cl.: C08K 3/00

(54) **Kautschukmischung**
Rubber composition
Composition du caoutchouc

(43) Veröffentlichungstag der Anmeldung: 26.11.2003
(73) Patentinhaber: Continental Aktiengesellschaft, 30165 Hannover (DE)
(72) Erfinder: Recker, Carla, Dr., 30167 Hannover (DE); Heinrich, Gert, Dr., 30163 Hannover (DE)

(56) Entgegenhaltungen:
- EP-A- 0 952 187
- WO-A-94/22680
- DE-A- 19 854 170
- US-A- 2 531 396
- US-A- 2 886 550
- US-A- 6 034 164

## Beschreibung

Die Erfindung betrifft ein Verfahren zur Herstellung einer vulkanisierbaren Kautschukmischung, insbesondere für Reifenlaufstreifen oder Luftfedern,wobei die Kautschukmischung zumindest einen Dienkautschuk, zumindest ein Schichtsilikat und weitere übliche Zusatzstoffe enthält.

Kautschukmischungen werden verschiedenste Füllstoffe, wie z. B. Ruß, Kieselsäure, Alumosilikate, Kaoline, Metalloxide oder Kreide, zugesetzt. Die Füllstoffe tragen dabei nicht nur zur Verbilligung der Kautschukmischungen bei, sondern beeinflussen durch ihre spezifische Wirkung auf den Kautschuk auch die Eigenschaften der unvulkanisierten Kautschukmischung und der daraus hergestellten Produkte, insbesondere Reifen oder Luftfedern. Aktive Füllstoffe, auch verstärkende Füllstoffe genannt, zu denen die meisten Ruße, Kieselsäure und die meisten feinteiligen Silikate zählen, verbessern im Allgemeinen eine Reihe von Vulkanisateigenschaften, wie Festigkeit, Spannungswert (Modul) und Einreißwiderstand, während andere Eigenschaften, wie Reißdehnung und Rückprallelastizität, negativ beeinflusst werden. Die Aktivität des Füllstoffes ist dabei abhängig von der Teilchengröße, der spezifischen Oberfläche, der geometrischen Gestalt der Oberfläche und der chemischen Zusammensetzung.

In der Vergangenheit wurden die bekannten Füllstoffe in mannigfaltiger Weise untersucht, verändert und modifiziert, um die Eigenschaften von Produkten, die diese Füllstoffe enthalten, zu optimieren. Außerdem wurden in diesem Zusammenhang neue Füllstoffklassen erschlossen.

Die Schichtsilikate bilden eine dieser Füllstoffklassen, wobei sich bei Schichtsilikaten das Problem ergibt, dass die Schichtsilikate aufgrund ihrer polaren Oberfläche nicht mit herkömmlichen Kautschuken kompatibel sind. D. h., man muss sie vor der Einbringung in eine Kautschukmischung so modifizieren, dass sie organophil und mit der umgebenden Kautschukmatrix kompatibel sind. Das Schichtsilikat lässt sich nur dann gut in der Kautschukmatrix verteilen. Um dies zu erreichen, ist es seit langem bekannt, die normalerweise hydrophile Oberfläche der Schichtsilikate durch Kationenaustausch mit Alkylammoniumionen so zu modifizieren, dass sie organophil wird. Die einzelnen organisch modifizierten Schichten sind dann parallel übereinander angeordnet und bilden kleine Stapel, in denen sich organische und anorganische Schichten regelmäßig abwechseln.

Aus derartigen organisch modifizierten Schichtsilikaten lassen sich Nanokomposite aus Polymeren und Schichtsilikaten erzeugen. Ein Nanokomposit ist dabei definiert als eine wechselwirkende Mischung aus zwei Phasen - in diesem Fall Polymer/organische Phase und Schichtsilikat/anorganische Phase -, von denen eine Phase zumindest in einer Dimension in der Größenordnung einiger Nanometer liegt.

Einen Überblick über Nanokomposite auf Basis von Polymeren und Schichtsilikaten, ihre Herstellung, Charakterisierung und Verwendung findet man z. B. in dem Artikel "Polymer layered silicate nanocomposites" von M. Zanetti, S. Lomakin und G. Camino in Macromol. Mater. Eng. 279, S. 1 - 9, (2000) oder in dem Artikel "Polymer-layered silicate nanocomposites: preparation, properties and uses of a new class of materials" von M. Alexandre und P. Dubois in Materials Science and Engineering 28, S. 1-63, (2000).
Für die Herstellung von Nanokompositen auf Basis von Polymeren und Schichtsilikaten werden dort vier Verfahren vorgestellt: die In-situ-Polymerisation, die Einlagerung (Intercalation) des Polymers aus einer Lösung (wie z.B. auch als Verfahren in EP 0 952 187 A1 offenbart), die direkte Einlagerung von geschmolzenem Polymer und die Sol/Gel-Technologie. Diese Verfahren führen dazu, dass die einzelnen Schichten des Silikates aufgeweitet werden und gegebenenfalls sogar vollständig auseinander geblättert (exfoliert) werden. Die einzelnen Schichten haben eine Dicke von ca. 1 nm und sind von Polymer umgeben. Das Vorliegen von Nanokompositen in Polymerwerkstoffen ermöglicht es, die daraus hergestellten Polymerprodukte mit neuen und verbesserten Eigenschaften auszustatten. Das Konzept der Nanokomposite auf Basis von Schichtsilikaten wird vor allem im Bereich der Thermoplaste eingesetzt, um deren Eigenschaften, z. B. im Hinblick auf die Zugfestigkeit, zu verbessern. Für Thermoplaste sind die vier genannten Verfahren zur Herstellung von Nanokompositen anwendbar, wohingegen für Kautschuke die direkte Einlagerung des geschmolzenen Polymers aufgrund der hohen Viskositäten im herkömmlichen Verarbeitungstemperaturbereich nicht möglich ist. Die anderen drei Verfahren sind auch für Kautschuk anwendbar, allerdings sind diese Verfahren technologisch sehr aufwendig und immer mit der Verwendung von Lösungsmitteln verbunden, die im weiteren Verlauf der Verarbeitung solcher Nanokomposite, z. B. vor der Einmischung in eine vulkanisierbare Kautschukmischung, i. A. wieder vollständig entfernt werden müssen.

Aus der WO 97/00910 ist es bekannt, einen Latex herzustellen, der Schichtsilikat mit eingelagertem Emulsionspolymer enthält. Für die Herstellung solch eines Latices wird das Schichtsilikat zunächst durch Ionenaustausch mit Oniumsalzen organophil ausgebildet und anschließend wird in einer Emulsion ein Kautschuk aus seinen Monomeren in Anwesenheit des organophilen Schichtsilkates in die Schichten des Silikates einpolymerisiert. Dabei bilden sich Nanokomposite aus. Nach der Koagulation und der Trocknung können derartige Nanokomposite in Kautschukmischungen z. B. für Reifeninnengummis mit verringerter Gaspermeabilität verwendet werden.

In der US 5,576,372 ist die Verwendung von Schichtsilikaten in Reifeninnengummis mit verringerter Gaspermeabilität beschrieben, wobei die Schichtsilikate mit einem reaktiven Kautschuk mit positiv geladenen Gruppen versehen werden. Die Schichtsilikate werden dazu mit einer Lösung, die den reaktiven Kautschuk enthält, i. A. einer Lösung mit organischem Lösungsmittel wie Toluol, behandelt. Der reaktive Kautschuk quillt in und zwischen die Schichten. Alle Lösungsmittel müssen im Anschluss vor der weiteren Verarbeitung, z. B. der Einmischung in eine Reifeninnengummimischung, entfernt werden.

Darüber hinaus sind viele organische Lösungsmittel als ökologisch und toxikologisch bedenklich einzustufen.

Speziell behandelte Schichtsilikate für Kautschukmischungen mit verbesserten mechanischen Eigenschaften und verringerter Gasdurchlässigkeit sind auch aus der US 6,103,817 bekannt. Die speziellen Schichtsilikate werden vor der Einmischung in die Kautschukmischung zunächst durch Ionenaustausch mit Oniumsalzen organophil ausgebildet und anschließend werden weitere organische Gastmoleküle aus organischem Lösungsmittel oder durch Behandeln des organophilen Schichtsilikates mit den flüssigen Gastmolekülen (bei Substanzen, die einen niedrigen Schmelzpunkt aufweisen) eingebracht / eingequollen, um den Abstand der Schichten im Schichtsilikat zu vergrößern und die Verteilung in der Kautschukmischung zu erleichtern und zu verbessern. Es können ein oder zwei verschiedene Substanzen in das Schichtsilikat eingebracht werden, wobei zumindest eine der Substanzen polare Gruppen aufweisen muss.

Den drei oben beschriebenen Verfahren ist gemeinsam, dass die Schichtsilikate vor der Einmischung in eine Kautschukmischung mit aufwendigen Verfahren so ausgebildet werden, dass die einzelnen Silikatschichten bereits vor der Einmischung durch Kautschukmoleküle voneinander getrennt werden, so dass Nanokomposite vorliegen.

In der US 2,531,396 werden verstärkte Elastomere und Verfahren zu ihrer Herstellung offenbart. Als Füllstoff dienen Schichtsilikate in Mengen von über 30 phr, die in einer basischen Ionenaustausch-Reaktion mit Oniumionen, z.B. Alkylammoniumionen, modifiziert sind. Die modifizierten Schichtsilikate werden in einem flüssigen Latex zugesetzt und es wird gemischt und gerührt, dabei quellen die Schichtsilikate bekanntermaßen auf und die Kautschukmoleküle aus dem Latex quellen in der dem Fachmann bekannten Weise als Gastmoleküle in die durch Oniumionen organophil ausgebildeten Schichtsilikate ein. Die Mischung aus modifiziertem Schichtsilikat und Latex wird ausgefällt, mit üblichen Mischungsbestandteilen versetzt und anschließend vulkanisiert. Nicht angesprochen werden die dynamischen und TieftemperaturEigenschaften, somit auch keine kälteflexiblen Produkte. Dies gilt im Übrigen auch für die oben erwähnte Druckschrift EP 0 952 187 A1.

Aus der US 6,034,164 ist es bekannt, mit Alkylammoniumionen modifizierte Schichtsilikate direkt in eine Kautschukmischung aus zwei speziellen Kautschuken ohne vorherige Einquellung oder Einpolymerisation von Kautschuk oder Gastmolekülen einzumischen. Bei den Kautschuken handelt es sich zum einen um ein nicht-ionisches Polymer mit einem Molekulargewicht > 50000 g/mol und zum anderen um ein nicht-ionisches Polymer, das kompatibel mit dem ersten Polymer ist und dessen Molekulargewicht kleiner ist als das des ersten Polymers. Man erhält durch die während des Mischprozesses auftretenden Kräfte in der Mischung Schichtpakete aus modifiziertem Schichtsilikat mit einer Dicke von mehr als 10 nm. Das vollständige Auseinanderblättern (Exfoliation) soll dabei vermieden werden. Derartige Kautschukmischungen können für die Herstellung von gasundurchlässigen Elastomermembranen, wie z. B. Reifeninnengummis oder Heizbälgen, aber nicht für kälteflexible Produkte, verwendet werden. Nicht diskutiert wird in dieser Druckschrift die Anwendung von speziellen Alkylammoniumionen mit mindestens einem Rest, der zumindest zwei Kohlenstoffatome und eine endständige Hydroxylgruppe aufweist.

Kautschukmischungen, die für Reifeninnengummis (Hauptaufgabe: Gasundurchlässigkeit) verwendet werden, genügen i. A. nicht den Erfordernissen, die an Kautschukmischungen von Reifenlaufstreifen oder Luftfedern gestellt werden. So müssen die verwendeten Kautschukmischungen für Reifenlaufstreifen bewirken, dass die Reifen z. B. hinsichtlich Abrieb, Rutschverhalten, Rollwiderstand, Heat build up, Weiterreißfestigkeit und Kälteflexibiliät optimiert werden. Für Winterreifen sollten die Mischungen für den Laufstreifen besonders positiven Einfluss auf die Wintereigenschaften, wie beispielsweise das Traktionsverhalten und das Bremsverhalten auf eisigem und schneeigem Untergrund oder den Nassgriff, haben. Dieses gute Verhalten auf Eis und Schnee ist z. B. durch eine bei tiefen Temperaturen dynamisch weichere Kautschukmischung (niedriger Wert des Speichermoduls E' bei - 15 °C) erreichbar. Bei der Verwendung der Kautschukmischungen für Luftfedern ist es wichtig, dass die Mischungen bei den Luftfedern eine hohe Weiterreißfestigkeit, eine gute Kälteflexibilität, eine gute Ölbeständigkeit, eine hohe Ermüdungsbeständigkeit und eine hohe Haftfähigkeit zu den Gewebelagen bewirken.

Der vorliegenden Erfindung liegt nun die Aufgabe zu Grunde, ein Verfahren zur Herstellung einer Kautschukmischung, insbesondere für Reifenlaufstreifen oder Luftfedern, bereitzustellen, die sich einfach und umweltfreundlicher herstellen lässt und die bei den daraus hergestellten Produkten eine hohe Kälteflexibilität bewirkt. Die Produkte weisen durch die hohe Kälteflexibilität verbesserte Tieftemperatureigenschaften auf. Bei Reifen heißt dies z. B., dass die Wintereigenschaften der Reifen verbessert werden. Bei Luftfedern ergibt sich durch eine hohe Kälteflexibilität eine verbesserte Haltbarkeit bei tiefen Temperaturen.

Gelöst wird diese Aufgabe dadurch, dass bei der Herstellung der Kautschukmischung, 1 bis 100 phr (Gewichtsteile bezogen auf 100 Gewichtsteile der gesamten Kautschukkomponenten) zumindest eines Schichtsilikates, welches mit Alkylammoniumionen der allgemeinen Formel ⁺NR¹R²R³R⁴ modifiziert ist, eingemischt werden, ohne dass durch eine vorherige Behandlung weitere Gastmoleküle zwischen die Silikatschicht eingequollenen oder einpolymerisierten werden, wobei R¹, R², R³ und R⁴ gleich oder verschieden sein können und ausgewählt sein können aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung, die auch Ether- und/oder Sulfid-Brücken aufweisen können, und substituierten oder unsubstituierten Aryl- und Benzylgruppen, und wobei zumindest ein R von R¹, R², R³ und R⁴ mindestens zwei Kohlenstoffatome und eine endständige Hydroxylgruppe aufweist.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise kann durch das Schichtsilikat, welches mit eine endständige Hydroxylgruppe enthaltenden Alkylammoniumionen modifiziert ist und welches keine weiteren durch eine zusätzliche Vorbehandlung eingebrachten Gastmoleküle aufweist, erreicht werden, dass die Vulkanisate eine verbesserte Kälteflexibilität aufweisen. Bei Verwendung der Kautschukmischung z. B. für Reifenlaufstreifen weisen die Reifen im Vergleich zu Reifen mit Laufstreifen aus herkömmlichen Ruß- oder Kieselsäuremischungen verbesserte Wintereigenschaften, wie z. B. verbesserten Eisgriff, auf, ohne dass dabei andere Reifeneigenschaften, wie z. B. das Handlingverhalten oder der Rollwiderstand in Mitleidenschaft gezogen werden. Die vulkanisierbaren Kautschukmischungen sind dynamisch weicher und die statischen Eigenschaften verbleiben dabei auf vergleichbarem Niveau. Gleichzeitig lassen sich derartige Kautschukmischungen einfach und umweltfreundlich herstellen, da in das modifizierte Schichtsilikat vor der Einmischung keine weiteren Substanzen in einem weiteren Arbeitsschritt eingebracht werden müssen.

Gemäß einer vorteilhaften Weiterbildung der Erfindung werden bei der Herstellung 5 bis 30 phr des Schichtsilikates in die Kautschukmischung eingemischt. Mit diesen Dosierungen können die besten Ergebnisse hinsichtlich einer Verbesserung der Kälteflexibilität erzielt werden.

Zur Herstellung der Kautschukmischungen können neben Schichtsilikat weitere Füllstoffe, wie beispielsweise Ruß, Kieselsäure, Aluminiumoxide, Alumosilikate, Kreide, Stärke, Magnesiumoxid, Titandioxid oder Kautschukgele, verwendet werden. Das modifizierte Schichtsilikat wird bevorzugt in Kombination mit Ruß und/oder Kieselsäure eingesetzt.

Besonders gute Kälteflexibilität kann man erzielen, wenn der Anteil des Schichtsilikates am gesamten Füllstoffanteil 15 bis 30 % beträgt. Das Schichtsilikat dient dann z. B. als Teilsubstitut für Ruß und/oder Kieselsäure in der Mischung.

Als Ausgangsmaterial für die modifizierten Schichtsilikate können alle dem Fachmann bekannten natürlichen und synthetischen Schichtsilikate, die zum Ionenaustausch geeignet sind, wie z. B. Montmorillonit, Smektit, Kaolinit und deren Gemische, die z. B. als unterschiedlichste Tonmineralien (z. B. Bentonit und Kaolin) in der Natur auftreten, verwendet werden. Die Schichtsilikate sollten aus Primärpartikeln aufgebaut sein, die im exfolierten Zustand eine plättchenförmige Form mit einer Dicke von 0,8 bis 2,0 nm und einen mittleren Flächendurchmesser von 80 bis 800 nm aufweisen. Die kleinen, extrem dünnen Plättchen können optimal in der Kautschukmischung verteilt und dort angebunden werden.

Die Oberfläche der Schichtsilikate ist durch Kationenaustausch mit Alkylammoniumionen der allgemeinen Formel ⁺NR₄ modifiziert, wobei das modifizierte Schichtsilikat einen bevorzugten Kohlenstoffgehalt von 8 bis 50 Gew.-% aufweist.

Gemäß einer Weiterbildung der Erfindung ist der Rest R mit der endständigen , Hydroxylgruppe eine Gruppe -(CH₂-CH₂-O)ₙH mit n = 1 bis 20, insbesondere mit n = 2. Besonders bevorzugt ist, wenn für die erfindungsgemäße Kautschukmischung ein Schichtsilikat verwendet wird, das mit einem Alkylammoniumion modifiziert ist, bei dem R¹ und R² gleich -(CH₂-CH₂-O)₂H sind, R³ Wasserstoff ist und R⁴ eine gesättigte, unverzweigte und unsubstituierte Alkylgruppe mit 8 bis 22, insbesondere mit 18, Kohlenstoffatomen ist. Derart modifizierte Schichtsilikate haben sich als besonders vorteilhaft bei der Verbesserung der Kälteflexibilität erwiesen.

Zur Herstellung der vulkanisierbaren Kautschukmischung wird zumindest ein Dienkautschuk verwendet. Dienkautschuke sind alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk, synthetischem Polyisopren, Polybutadien, Styrol-Butadien-Copolymer, Isopren-Butadien-Kautschuk, Styrol-Isopren-Butadien-Kautschuk und Chloroprenkautschuk, wobei die ersten sechs genannten Dienkautschuke häufig für Reifenlaufstreifen verwendet werden und der letztgenannte Kautschuk häufig für Luftfedern eingesetzt wird. Diese Dienelastomere lassen sich gut zu der erfindungsgemäßen Kautschukmischung verarbeiten und zeigen gute Vulkanisateigenschaften.

Zur Herstellung der Kautschukmischung kann als Dienkautschuk Polyisopren (IR, NR) verwendet werden. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 %. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 %.
Mit Naturkautschuk lässt sich das Verarbeitungsverhalten verbessern und Rohfestigkeit, Konfektionsklebrigkeit, Kerbfestigkeit und Weiterreißfestigkeit der Vulkanisate nehmen zu.

Enthält die vulkanisierbare Kautschukmischung als Dienkautschuk Polybutadien (BR), kann es sich dabei sowohl um cis-1,4- als auch um vinyl-Polybutadien (40-90 % Vinyl-Anteil) handeln. Bevorzugt ist die Verwendung von cis-1,4-Polybutadien mit einem cis-1,4-Anteil größer 90 %, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt von ca. 10 bis 45 Gew.-% und einem 1,2-Anteil von 10 bis 70 % handeln, welches zum Beispiel unter Verwendung von Lithiumalkylen in organischem Lösungsmittel hergestellt werden kann. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden. E-SBR in Mischungen kann im Vergleich zu S-SBR Verbesserungen bei der Verarbeitung mit sich bringen.

Wird Chloroprenkautschuk zur Herstellung der vulkanisierbaren Kautschukmischung eingesetzt, z. B. weil die Mischung bei einer Luftfeder eingesetzt werden soll, so können sowohl mercaptan- als auch schwefelmodifizierte Typen in vorvernetzter oder nicht vorvernetzter Form eingesetzt werden. Die Vulkanisate aus Chloroprenkautschuk zeichnen sich bei durch hohe Wetter- und Ozonbeständigkeit, Flammwidrigkeit, sehr gute Alterungseigenschaften, Beständigkeit gegen viele Chemikalien, gute mechanische Eigenschaften, gutes elastisches Verhalten und eine hohe Verschleißfestigkeit aus. Bevorzugt eingesetzt werden schwefelmodifizierte Typen, da diese Typen eine höhere dynamische Haltbarkeit der daraus hergestellten Vulkanisate bewirken und sich außerdem durch ein gutes Verarbeitungsverhalten auszeichnen.

Zusätzlich zu den genannten Dienkautschuken kann die Mischung aber auch noch andere Kautschuktypen, wie z. B. Butylkautschuk, Halobutylkautschuk, Acrylnitril-Butadien-Kautschuk, hydrierten Acrylnitril-Butadien-Kautschuk, epoxidierten Naturkautschuk, hydroxylierten Naturkautschuk, Ethylen-Propylen-Dien-Kautschuk (EPDM) oder endgruppen- oder hauptkettenmodifizierte synthetische Kautschuke, enthalten.

Vorteilhafterweise enthält die Kautschukmischung zumindest ein Silan-Kupplungsagens zur Anbindung des Schichtsilikates an den Kautschuk, wodurch die Festigkeit der Vulkanisate verbessert wird. Das Silan-Kupplungsagens reagiert mit den oberflächlichen Silanolgruppen des Schichtsilikates, die nicht mit Alkylammioniumionen belegt sind, un/oder mit den Hydroxylgruppen des Alkylammoniumions während des Mischens der Kautschukmischung (in situ). Als Silan-Kupplungsagenzien können dabei alle dem Fachmann für die Verwendung in Kautschukmischungen bekannten Silan-Kupplungsagenzien, die er auch für die Anbindung von Kieselsäure an Kautschuk kennt, verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die - gegebenenfalls nach Spaltung - durch eine chemische Reaktion bei der Vulkanisation mit dem Polymer verbunden werden kann. Bei der letztgenannten Gruppe kann es sich z. B. um die folgenden chemischen Gruppen handeln: -Cl, -SCN, -SH, -NH₂ oder -Sₓ- (mit x = 2-8). So können als Silan-Kupplungsagens z. B. 3-Chloropropyltriethoxysilan, 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. 3-Chloropropyltriethoxysilan wird bevorzugt in Mischungen mit Chloroprenkautschuk verwendet. Durch die Zudosierung unterschiedlicher Mengen an Schichtsilikat kann der Grad der Ankopplung des Schichtsilikates an die umgebenden Kautschukmoleküle beeinflusst werden. Bei Reifenlaufstreifenmischungen hat der Einsatz von Silan-Kupplungsagens außerdem den Vorteil, dass Reifen mit einem derartigen Laufstreifen einen verringerten Rollwiderstand, welcher einen niedrigen Kraftstoffverbrauch bedingt, aufweisen.

Des Weiteren können zur Herstellung der vulkanisierbaren Kautschukmischung übliche Zusatzstoffe in üblichen Gewichtsteilen eingesetzt werden. Zu diesen Zusatzstoffen zählen z. B. Alterungsschutzmittel (wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ), octyliertes Diphenylamin (ODPA), styrolysiertes Diphenylamin (SDPA) und andere Substanzen wie sie beispielsweise aus J. Schnetger, Lexikon der Kautschuktechnik, 2. Auflage, Hüthig Buch Verlag, Heidelberg, 1991, S. 42-48 bekannt sind), Verarbeitungshilfsmittel (wie z. B. Zinkoxid, Zinkstearat und Fettsäuren, wie Stearinsäure), Wachse und Mastikationshilfsmittel (wie z. B. 2,2'-Dibenzamidodiphenyldisulfid (DBD)). Weichmacher, wie z. B. Mineralölweichmacher, Esterweichmacher (z. B. Rapsöl oder Dioctylsebacat) oder flüssiges Polybutadien, können in Mengen von 2 bis 50 phr in der Mischung enthalten sein.

Die Vulkanisation kann in Anwesenheit von Schwefel oder Schwefelspendern durchgeführt werden, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Die Vulkanisation kann aber auch über Metalloxide, wie z. B. Magnesium-, Zink-, oder Bleioxid sowie deren Kombinationen, erfolgen. Insbesondere werden Metalloxide bei Chloroprenkautschuk enthaltenden Mischungen eingesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der vulkanisierbaren Kautschukmischung erfolgt auf herkömmliche Art und Weise in einer oder mehreren Mischstufen. Anschließend wird diese weiterverarbeitet, z. B. durch einen Extrusions- oder Kalandriervorgang und in die entsprechende Form des gewünschten Rohlings, z. B. eines Laufstreifenrohlings oder einen Luftfederrohling, gebracht. Im Falle eines Laufstreifenmischungsrohlings wird dieser bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Kautschukmischungsstreifens aufgewickelt werden. Nach der Vulkanisation des Fahrzeugreifens weist der Reifen Vorteile in den Wintereigenschaften auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von einigen Beispielen, die in den Tabellen 1, 2 und 3 zusammengefasst sind, näher erläutert werden, ohne jedoch auf diese Beispiele beschränkt zu sein.

Bei sämtlichen in den Tabelle 1, 2 und 3 enthaltenen Mischungsbeispielen sind die angegebenen Mengenangaben Gewichtsteile, die auf 100 Gewichtsteile Gesamtkautschuk bezogen sind (phr). Alle Mischungen ließen sich mit dem Fachmann bekannten Verfahren einfach und unproblematisch mischen. Bei den aufgeführten Mischungen handelt es sich um solche, die z. B. für Reifenlaufstreifen verwendet werden können. Mit V bezeichnete Mischungen dienen als Vergleichsmischungen, sie enthalten Kieselsäure und/oder Ruß oder Schichtsilikate, die nicht mit Ammoniumionen gemäß Anspruch 1 modifiziert sind. Mit E sind erfindungsgemäße Mischungen bezeichnet, die ein modifiziertes Schichtsilikat gemäß dem Anspruch 1 aufweisen.

Die verschiedenen Mischungen wurden bei 160°C unter Druck über die mittels Rheometerkurven ermittelten optimalen Vulkanisationszeiten zu Prüfkörpern vulkanisiert.

Mit diesen Prüfkörpern wurden für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Reißdehnung bei Raumtemperatur gemäß DIN 53 504
- Spannungswerte bei 100, 200 und 300 % Dehnung bei Raumtemperatur gemäß DIN 53 504
- Bruchenergiedichte bestimmt im Zugversuch nach DIN 53 504, wobei die Bruchenergiedichte die bis zum Bruch erforderliche Arbeit bezogen auf das Volumen der Probe ist
- Shore-A-Härte bei Raumtemperatur und 70 °C gemäß DIN 53 505
- Rückprallelastizität bei Raumtemperatur und 70 °C gemäß DIN 53 512
- Abrieb gemäß DIN 53 516
- dynamischer Speichermodul E' bei -15 °C gemäß DIN 53 513 aus Messung mit konstanter Verformungsamplitude von 0,2 % bei 10 % Verformung in Kompression mit 10 Hz dynamischer Verformungsfrequenz
- Verlustfaktor tan 8 bei 60 °C gemäß DIN 53 513 aus Messung mit konstanter Verformungsamplitude von 0,2 % bei 10 % Verformung in Kompression mit 10 Hz dynamischer Verformungsfrequenz.

Der dynamische Speichermodul E' bei -15 °C kann mit der Kälteflexibilität korreliert werden, wobei niedrigere Werte des Speichermoduls für eine verbesserte Kälteflexibilität und z. B. bei Reifenlaufsteifen für verbesserte Wintereigenschaften stehen. Der Verlustfaktor tan δ bei 60 °C kann mit dem Rollwiderstand eines Reifens korreliert werden, wobei ein niedrigerer Wert gleichbedeutend mit einem verringerten Rollwiderstand ist.

In der Tabelle 3 sind zusätzlich die Umsatzzeiten bis zum Erreichen der relativen Vernetzungsgrade von 10 und 95 % (t₁₀, t₉₅) angegeben, die durch Verfolgung des Vulkanisationsprozess über ein rotorloses Vulkameter (MDR = Moving Disc Rheometer) gemäß DIN 53 529 ermittelt wurden. Außerdem sind in Tabelle 2 die Mooney-Viskositäten der Mischungen gemäß DIN 53 523, ermittelt mit einem Scherscheiben-Viskosimeter bei 100 °C, angegeben.

**Tabelle 1**

| **Bestandteile** | **Einheit** | **V1** | **E1** | **E2** | **E3** | **E4** |
|---|---|---|---|---|---|---|
| Naturkautschuk | phr | 50 | 50 | 50 | - | - |
| Polybutadien¹ | phr | 20 | 20 | 20 | - | - |
| S-SBR² | phr | 30 | 30 | 30 | 100 | 100 |
| Kieselsäure³ | phr | 50 | 0 | 25 | - | - |
| modifiziertes Schichtsilikat Typ 1⁴ | phr | 0 | 45 | 22,5 | 50 | 50 |
| Silan-Kupplungsagens⁵ | phr | 3,5 | 3,5 | 3,5 | - | 4 |
| Verarbeitungshilfsmittel | phr | 3 | 3 | 3 | - | - |
| Stearinsäure | phr | 2 | 2 | 2 | 1,5 | 1,5 |
| Zinkoxid | phr | 3 | 3 | 3 | 3 | 3 |
| Ozonschutzwachs | phr | 2 | 2 | 2 | - | - |
| Alterungsschutzmittel | phr | 2 | 2 | 2 | 2 | 2 |
| Schwefel | phr | 1,85 | 1,85 | 1,85 | 1,8 | 1,8 |
| Beschleuniger | phr | 3,8 | 3,8 | 3,8 | 2,3 | 2,3 |

| **Eigenschaften** | | | | | | |
|---|---|---|---|---|---|---|
| Zugfestigkeit | MPa | 16,4 | 11,6 | 16,6 | 4,5 | 6,9 |
| Reißdehnung | % | 446 | 519 | 599 | 762 | 478 |
| Spannungswert 100 % | MPa | 2,37 | 2,71 | 2,28 | 1,27 | 2,36 |
| Spannungswert 200 % | MPa | 5,84 | 5,09 | 4,41 | 1,71 | 4,18 |
| Spannungswert 300 % | MPa | 10,55 | 6,91 | 6,75 | 2,121 | 5,48 |
| Bruchenergiedichte | J/cm³ | 28,6 | 27,7 | 38,4 | 16,8 | 18,4 |
| Shorehärte bei RT | Shore A | 64,5 | 58,3 | 59,3 | 52,2 | 59,9 |
| Shorehärte bei 70 °C | Shore A | 61,9 | 55,1 | 56,8 | 47,39 | 57,8 |
| Rückprallelastizität bei RT | % | 51,6 | 62,4 | 61,2 | 52,6 | 54 |
| Rückprallelastizität bei 70 °C | % | 67,1 | 69,1 | 71,2 | 53,4 | 60 |
| dyn. Speichermodul E'(-15°C) | MPa | 23,8 | 11,7 | 12,2 | 22,73 | 25,26 |
| Verlustfaktor tan δ (60 °C) | - | 0,063 | 0,050 | 0,050 | 0,136 | 0,110 |

| | | | | | | |
|---|---|---|---|---|---|---|
| ¹ cis-1,4-Polybutadien mit einem cis-Anteil > 90 % ² Styrol- Butadien-Copolymer in Lösung polymerisiert, Styrolgehalt: 25 %, Vinylgehalt: 24 % ³ Typ VN3, Degussa AG, Deutschland ⁴ Schichtsilikat Bentonit modifiziert mit Alkylammoniumionen mit R¹ und R² gleich -(CH₂-CH₂-O)₂H, R³ gleich Wasserstoff und R⁴ gleich einer gesättigten, unverzweigten und unsubstituierten Alkylgruppe mit 18, Kohlenstoffatomen ⁵ Si69, Degussa AG, Deutschland | | | | | | |

In der Tabelle 1 ist eine Vergleichsmischung V1 angegeben, die Kieselsäure enthält. In den erfindungsgemäßen Mischungen E1 und E2 ist bei sonst gleichbleibender Mischungszusammensetzung die Kieselsäure ganz oder teilweise durch ein mit Alkylammoniumionen mit R¹ und R² gleich -(CH₂-CH₂-O)₂H, R³ gleich Wasserstoff und R⁴ gleich einer gesättigten, unverzweigten und unsubstituierten Alkylgruppe mit 18, Kohlenstoffatomen modifiziertes Schichtsilikat ersetzt. Wie aus der Tabelle 1 ersichtlich ist, wird durch die Verwendung des modifizierten Schichtsilikates der dynamische Speichermodul E' bei - 15 °C im Vergleich zur Mischung V1 erheblich verringert, die Kälteflexibilität wird also stark verbessert. Die Tieftemperaturhaltbarkeit dynamisch belasteter Vulkanisate aus solchen Mischungen wird dadurch verbessert. Bei Verwendung solcher Mischungen für Reifenlaufstreifen von Fahrzeugreifen, weisen die Reifen verbesserte Wintereigenschaften, wie z. B. einen verbesserten Eisgriff, auf.
Aus einem Vergleich der Verlustfaktoren tan δ bei 60 °C wird ersichtlich, dass die Mischungen E1 und E2 als Reifenlaufstreifen einen verringerten Rollwiderstand bei Reifen bewirken.

Die Mischungen E3 (ohne Silankupplungsagens) und E4 (mit Silankupplungsagens) machen deutlich, dass die statischen Eigenschaften und der Rollwiderstand einer Mischung mit modifiziertem Schichtsilikat weiter verbessert werden können, wenn ein Silankupplungsagens zur Anbindung des Schichtsilikates an den Kautschuk zur Mischung gegeben wird.

**Tabelle 2**

| **Bestandteile** | **Einheit** | **V2** | **V3** | **V4** | **E5** |
|---|---|---|---|---|---|
| E-SBR¹ | phr | 100 | 100 | 100 | 100 |
| S-SBR² | phr | - | - | - | - |
| Ruß N339 | phr | 50 | - | - | - |
| modifiziertes Schichtsilikat Typ 1³ | phr | - | - | - | 50 |
| modifiziertes Schichtsilikat Typ 2⁴ | phr | - | 50 | - | - |
| modifiziertes Schichtsilikat Typ 3⁵ | phr | - | - | 50 | - |
| Silan-Kupplungsagens⁶ | phr | - | - | - | - |
| Stearinsäure | phr | 1,5 | 1,5 | 1,5 | 1,5 |
| Zinkoxid | phr | 3 | 3 | 3 | 3 |
| Alterungsschutzmittel | phr | 2 | 2 | 2 | 2 |
| Schwefel | phr | 1,5 | 1,5 | 1,5 | 1,5 |
| Beschleuniger | phr | 1,5 | 1,5 | 1,5 | 1,5 |

| **Eigenschaften** | | | | | |
|---|---|---|---|---|---|
| Zugfestigkeit | MPa | 18,9 | 5,4 | 5,3 | 5,8 |
| Reißdehnung | % | 368 | 491 | 376 | 369 |
| Spannungswert 100 % | MPa | 2,82 | 1,63 | 2,26 | 1,97 |
| Spannungswert 200 % | MPa | 8,61 | 2,6 | 3,62 | 3,36 |
| Spannungswert 300 % | MPa | 16,17 | 3,69 | 4,91 | 4,93 |
| Bruchenergiedichte | J/cm³ | 26,5 | 13,4 | 11,5 | 12,6 |
| Shorehärte bei RT | Shore A | 67,6 | 61 | 70,4 | 62 |
| Shorehärte bei 70 °C | Shore A | 64,2 | 49,1 | 46,7 | 55,3 |
| Rückprallelastizität bei RT | % | 41,8 | 39,1 | 22,4 | 39,2 |
| Rückprallelastizität bei 70 °C | % | 48,6 | 36 | 23,7 | 49,1 |
| dyn. Speichermodul E' (-15 °C) | MPa | 45,4 | 49,49 | 146,5 | 25,63 |
| Verlustfaktor tan δ (60 °C) | - | 0,144 | 0,245 | 0,293 | 0,149 |

| | | | | | |
|---|---|---|---|---|---|
| ¹ Styrol- Butadien-Copolymer in Emulsion polymerisiert, Styrol gehalt: 23,5 % ² Styrol- Butadien-Copolymer in Lösung polymerisiert, Styrolgehalt: 25 %, Vinylgehalt: 24 % ³ Schichtsilikat Bentonit modifiziert mit Alkylammoniumionen mit R¹ und R² gleich -(CH₂-CH₂-O)₂H, R³ gleich Wasserstoff und R⁴ gleich einer gesättigten, unverzweigten und unsubstituierten Alkylgruppe mit 18, Kohlenstoffatomen ⁴ Schichtsilikat Bentonit modifiziert mit Benzyldioctadecylmethylammoniumionen ⁵ Schichtsilikat Bentonit modifiziert mit Dimethyldioctadecylammoniumionen ⁶ Si69, Degussa AG, Deutschland | | | | | |

In Tabelle 2 unterscheiden sich die Mischungen V2, V3, V4 und E5 in ihrer Zusammensetzung allein durch den verwendeten Füllstoff. Die Mischung V2 enthält Ruß, die Mischungen V3, V4 und E5 enthalten modifizierte Schichtsilikate, wobei einzig die Mischung E5 ein Schichtsilikat gemäß Anspruch 1 enthält, welches mit Alkylammoniumionen, die jeweils eine endständige Hydroxylgruppe aufweisen, modifiziert ist. Nur die Mischung E5 zeigt überraschender Weise eine Verringerung des dynamischen Speichermoduls E' gleichbedeutend mit einer verbesserten Kälteflexibilität, wobei die anderen Vulkanisateigenschaften im Vergleich zur rußgefüllten Mischung V2 auf ähnlichem Niveau verbleiben. Bei Verwendung der anderen Schichtsilikate Typ 2 und Typ 3 erhält man dagegen Vulkanisate, die einen höheren Speichermodul E' bei - 15 °C zeigen und der Verlustfaktor tan δ bei 60 °C dieser Mischungen liegt auch bei deutlich höheren Werten, was bei Verwendung für Reifenlaufstreifen zu äußerst hohen Rollwiderständen verbunden mit hohem Kraftstoffverbrauch führen würde.

**Tab. 3**

| **Bestandteile** | **Einheit** | **V5** | **E6** | **E7** | **E8** | **V6** | **E9** | **E10** | **E11** |
|---|---|---|---|---|---|---|---|---|---|
| Naturkautschuk | phr | 30 | 30 | 30 | 30 | 30 | 30 | 30 | 30 |
| Polybutadien¹ | phr | 40 | 40 | 40 | 40 | 40 | 40 | 40 | 40 |
| S-SBR² | phr | 30 | 30 | 30 | 30 | 30 | 30 | 30 | 30 |
| Weichmacheröl | phr | 42 | 42 | 42 | 42 | 32 | 32 | 32 | 32 |
| Ruß N339 | phr | 14 | 14 | 14 | 14 | 14 | 14 | 14 | 14 |
| Kieselsäure³ | phr | 87 | 76,1 | 65,3 | 43,5 | 87 | 76,1 | 65,3 | 43,5 |
| modifiziertes. Schichtsilikat Typ 1⁴ | phr | - | 9,8 | 19,6 | 39,5 | - | 9,8 | 19,6 | 39,5 |
| Verarbeitungshilfsmittel | phr | 5 | 5 | 5 | 5 | 5 | 5 | 5 | 5 |
| Stearinsäure | phr | 2 | 2 | 2 | 2 | 2 | 2 | 2 | 2 |
| Zinkoxid | phr | 3 | 3 | 3 | 3 | 3 | 3 | 3 | 3 |
| Alterungsschutzmittel | phr | 2 | 2 | 2 | 2 | 2 | 2 | 2 | 2 |
| Ozonschutzwachs | phr | 2 | 2 | 2 | 2 | 2 | 2 | 2 | 2 |
| Silan-Kupplungsagens⁵ | phr | 7,4 | 7,4 | 7,4 | 7,4 | 7,4 | 7,4 | 7,4 | 7,4 |
| Schwefel | phr | 1,6 | 1,6 | 1,6 | 1,6 | 1,6 | 1,6 | 1,6 | 1,6 |
| Beschleuniger | phr | 3,9 | 3,9 | 3,9 | 3,9 | 3,9 | 3,9 | 3,9 | 3,9 |
| t₁₀ | min | 2,85 | 2,68 | 3,11 | 1,64 | 2,57 | 2,25 | 2,35 | 1,3 |
| t₉₅ | min | 8 | 10,49 | 9,43 | 7,95 | 7,12 | 8,52 | 10,64 | 8,27 |
| ML 1+3 100 °C | - | 43 | 35,7 | 31,8 | 27,7 | 51,4 | 43,3 | 36,1 | 31,1 |
| Dichte | g/mL | 1,98 | 1,192 | 1,182 | 1,169 | 1,209 | 1,203 | 1,19 | 1,176 |
| Zugfestigkeit | MPa | 13,3 | 13,3 | 11,6 | 11,2 | 14,7 | 14,5 | 13,7 | 11,7 |
| Reißdehnung | % | 618 | 662 | 752 | 722 | 572 | 647 | 692 | 737 |
| Spannungswert 100 % | MPa | 1,48 | 1,58 | 1,29 | 1,64 | 1,99 | 1,87 | 1,76 | 1,72 |
| Spannungswert 200 % | MPa | 3,35 | 3,4 | 2,59 | 3,16 | 4,55 | 4 | 3,63 | 3,23 |
| Spannungswert 300 % | MPa | 5,94 | 5,67 | 4,07 | 4,65 | 7,70 | 6,59 | 5,72 | 4,79 |
| Bruchenergiedichte | J/cm³ | 34,3 | 37,3 | 35,9 | 35,5 | 36,3 | 40,8 | 40,8 | 38,2 |
| Shorehärte bei RT | Shore A | 61 | 59,5 | 53,2 | 57,1 | 66,7 | 62,5 | 58,9 | 57,4 |
| Shorehärte bei 70 °C | Shore A | 55,8 | 53,8 | 48,6 | 51,2 | 61,0 | 57,3 | 54,2 | 52,2 |
| Rückprallelastizität RT | % | 31,9 | 35,5 | 36,3 | 37,2 | 32,9 | 36,1 | 38,3 | 34,9 |
| Rückprallelastizität 70 °C | % | 45,2 | 46,8 | 48,6 | 44,9 | 46,5 | 48,3 | 50,2 | 42,5 |
| Abrieb | mm³ | 107 | 149 | 296 | 249 | 113 | 156 | 165 | 242 |
| dynamischer Speichermodul E` (-15°C) | MPa | 32,40 | 31,48 | 20,62 | 28,94 | 38,82 | 33,57 | 27,76 | 35,86 |
| Verlustfaktor tan 8 (60 °C) - | - | 0,126 | 0,139 | 0,111 | 0,132 | 0,125 | 0,120 | 0,116 | 0,178 |

| | | | | | | | | | |
|---|---|---|---|---|---|---|---|---|---|
| 1 cis-1,4-Polybutadien mit einem cis-Anteil > 90 % 2 Styrol- Butadien-Copolymer in Lösung polymerisiert, Styrolgehalt: 25 %, Vinylgehalt: 24 % 3 Typ VN3, Degussa AG, Deutschland 4 Schichtsilikat Bentonit modifiziert mit Alkylammoniumionen mit R¹ und R² gleich -(CH₂-CH₂-O)₂H, R³ gleich Wasserstoff und R⁴ gleich einer gesättigten, unverzweigten und unsubstituierten Alkylgruppe mit 18, Kohlenstoffatomen 5 Si69, Degussa AG, Deutschland | | | | | | | | | |

Die Mischung V5 enthält Ruß und Kieselsäure und kein Schichtsilikat. Bei den Mischungen E6 bis E8 ist ein Teil des Füllstoffes Kieselsäure durch modifiziertes Schichtsilikat gemäß Anspruch 1 ersetzt. Analog verhält es sich bei den Mischungen V6 und E9 bis E11, nur dass in diesen Mischungen nur 32 phr Weichmacheröl enthalten sind. Die Werte in der Tabelle 3 belegen, dass schon ein teilweiser Austausch des Kieselsäureanteils durch das modifizierte Schichtsilikat deutliche Vorteile im dynamischen Speichermodul E' bei - 15 °C und damit in der Kälteflexibilität der Vulkanisate bringt. Die anderen Vulkanisateigenschaften verbleiben auf vergleichbarem Niveau oder werden sogar noch verbessert. Reifen mit einem Laufstreifen aus derartigen Mischungen weisen einen verbesserten Griff auf eisiger Straße auf.
Besonders gute Ergebnisse im Hinblick auf die Kälteflexibilität werden überraschenderweise erzielt, wenn der Anteil an Schichtsilikat am gesamten Füllstoffanteil (Ruß + Kieselsäure + Schichtsilikat) zwischen 15 und 30 % liegt, wie es bei den Mischungen E7 und E10 der Fall ist. Auch bei den Verlustfaktoren tan δ bei 60 °C spiegelt sich dieser besonders bevorzugte Anteil an modifiziertem Schichtsilikat wider, denn auch bei den Verlustfaktoren tan δ bei 60 °C zeigen die Mischungen E7 und E10 die besten Werte.

## Patentansprüche

1. Verfahren zur Herstellung einer vulkanisierbaren Kautschukmischung, insbesondere für Reifenlaufstreifen oder Luftfedern, wobei die Kautschukmischung zumindest einen Dienkautschuk, zumindest ein Schichtsilikat und weitere übliche Zusatzstoffe enthält,
**dadurch gekennzeichnet,**
**dass** bei der Herstellung der Kautschukmischung 1 bis 100 phr (Gewichtsteile bezogen auf 100 Gewichtsteile der gesamten Kautschukkomponenten) zumindest eines Schichtsilikates, welches mit Alkylammoniumionen der allgemeinen Formel ⁺NR¹R²R³R⁴ modifiziert ist, eingemischt werden, ohne dass durch eine vorherige Behandlung weitere Gastmoleküle zwischen die Silikatschicht eingequollen oder einpolymerisiert werden,
wobei R¹, R², R³ und R⁴ gleich oder verschieden sein können und ausgewählt sein können aus der Gruppe, bestehend aus Wasserstoff, substituierten oder unsubstituierten, gesättigten oder ungesättigten Alkylgruppen mit 1 bis 40 Kohlenstoffatomen mit oder ohne Verzweigung, die auch Ether- und/oder Sulfid-Brücken aufweisen können, und substituierten oder unsubstituierten Aryl- und Benzylgruppen, und wobei zumindest ein R von R¹, R², R³ und R⁴ mindestens zwei Kohlenstoffatome und eine endständige Hydroxylgruppe aufweist.

2. Verfahren nach Anspruch 1, **dadurch gekennzeichnet, dass** 5 bis 30 phr des Schichtsilikates eingemischt werden.

3. Verfahren nach Anspruch 1 oder 2, **dadurch gekennzeichnet, dass** die Kautschukmischung neben dem Schichtsilikat als weitere Füllstoffe Ruß und/oder Kieselsäure enthält.

4. Verfahren nach zumindest einem der Ansprüche 1 bis 3, **dadurch gekennzeichnet, dass** der Anteil des Schichtsilikates am gesamten Füllstoffanteil 15 bis 30 % beträgt.

5. Verfahren nach zumindest einem der Ansprüche 1 bis 4, **dadurch gekennzeichnet, dass** das Schichtsilikat aus Primärpartikeln aufgebaut ist, die im exfolierten Zustand eine plättchenförmige Form mit einer Dicke von 0,8 bis 2,0 nm und einem mittleren Flächendurchmesser von 80 bis 800 nm aufweisen.

6. Verfahren nach zumindest einem der Ansprüche 1 bis 5, **dadurch gekennzeichnet, dass** das modifizierte Schichtsilikat einen Kohlenstoffgehalt von 8 bis 50 Gew.-% aufweist.

7. Verfahren nach zumindest einem der Ansprüche 1 bis 6, **dadurch gekennzeichnet, dass** der Rest R mit der endständigen Hydroxylgruppe eine Gruppe -(CH₂-CH₂-O)ₙH mit n = 1 bis 20, insbesondere mit n = 2, ist.

8. Verfahren nach Anspruch 7, **dadurch gekennzeichnet, dass** R¹ und R² gleich -(CH₂-CH₂-O)₂H sind, R³ Wasserstoff ist und R⁴ eine gesättigte, unverzweigte und unsubstituierte Alkylgruppe mit 8 bis 22, insbesondere mit 18, Kohlenstoffatomen ist.

9. Verfahren nach zumindest einem der Ansprüche 1 bis 8, **dadurch gekennzeichnet, dass** der Dienkautschuk oder die Dienkautschuke ausgewählt ist bzw. sind aus der Gruppe, bestehend aus Naturkautschuk, synthetischem Polyisopren, Polybutadien, Styrol-Butadien-Copolymer, Isopren-Butadien- Kautschuk, Styrol-Isopren-Butadien-Kautschuk und Chloroprenkautschuk.

10. Verfahren nach zumindest einem der Ansprüche 1 bis 9, **dadurch gekennzeichnet, dass** die Kautschukmischung zumindest ein Silan-Kupplungsagens zur Anbindung des Schichtsilikates an Kautschuk enthält.

11. Kautschukmischung, insbesondere für Reifenlaufstreifen oder Luftfedern, die nach dem Verfahren nach zumindest einem der Ansprüche 1 bis 10 herstellt wurde.

12. Fahrzeugreifen, dessen Laufstreifen zumindest zum Teil aus einer mit Schwefel vulkanisierten Kautschukmischung nach Anspruch 11 besteht.

13. Luftfeder, die zumindest zum Teil aus einer vulkanisierten Kautschukmischung nach Anspruch 11 besteht.

## Claims

1. Process for the preparation of a vulcanizable rubber mixture, in particular for tyre treads or air springs, where the rubber mixture comprises at least one diene rubber, at least one phyllosilicate and further conventional additives,
**characterized in that**,
during the production of the rubber mixture, mixing incorporates from 1 to 100 phr (parts by weight, based on 100 parts by weight of all of the components of the rubber) of at least one phyllosilicate which has been modified with alkylammonium ions of the general formula ⁺NR¹R²R³R⁴, without any prior treatment that uses a swelling or polymerization method to introduce further foreign molecules between the silicate layer,
where R¹, R², R³ and R⁴ can be identical or different and can have been selected from the group consisting of hydrogen, substituted or unsubstituted, saturated or unsaturated alkyl groups having from 1 to 40 carbon atoms with or without branching, where these can also have ether bridges and/or sulphide bridges, and of substituted or unsubstituted aryl and benzyl groups, and where at least two carbon atoms and one terminal hydroxy group are present in at least one R of R¹, R², R³ and R⁴.

2. Process according to Claim 1, **characterized in that** mixing incorporates from 5 to 30 phr of the phyllosilicate.

3. Process according to Claim 1 or 2, **characterized in that** the rubber mixture comprises carbon black and/or silica as further fillers alongside the phyllosilicate.

4. Process according to at least one of Claims 1 to 3, **characterized in that** the proportion of the phyllosilicate, based on the entire filler content, is from 15 to 30% by weight.

5. Process according to at least one of Claims 1 to 4, **characterized in that** the phyllosilicate is composed of primary particles which in the exfoliated condition have a lamellar shape with a thickness of from 0.8 to 2.0 nm and with an average surface diameter of from 80 to 800 nm.

6. Process according to at least one of Claims 1 to 5, **characterized in that** the carbon content of the modified phyllosilicate is from 8 to 50% by weight.

7. Process according to at least one of Claims 1 to 6, **characterized in that** the radical R having the terminal hydroxy group is a -(CH₂-CH₂-O)ₙH group,
where n = from 1 to 20, in particular where n = 2.

8. Process according to Claim 7, **characterized in that** R¹ and R² are -(CH₂-CH₂-O)₂H, R³ is hydrogen and R⁴ is a saturated, unbranched and unsubstituted alkyl group having from 8 to 22 carbon atoms, in particular having 18 carbon atoms.

9. Process according to at least one of Claims 1 to 8, **characterized in that** the diene rubber or the diene rubbers has/have been selected from the group consisting of natural rubber, synthetic polyisoprene, polybutadiene, styrene-butadiene copolymer, isoprene-butadiene rubber, styreneisoprene-butadiene rubber and chloroprene rubber.

10. Process according to at least one of Claims 1 to 9, **characterized in that** the rubber mixture comprises at least one silane coupling agent for coupling of the phyllosilicate to rubber.

11. Rubber mixture, in particular for tyre treads or air springs, which has been prepared by the process according to at least one of Claims 1 to 10.

12. Vehicle tyre whose tread is at least to some extent composed of a sulphur-vulcanized rubber mixture according to Claim 11.

13. Air spring, which is at least to some extent composed of a vulcanized rubber mixture according to Claim 11.

## Revendications

1. Procédé pour la préparation d'un mélange de caoutchouc pouvant être vulcanisé, en particulier pour des bandes de roulement de pneus ou des amortisseurs pneumatiques, le mélange de caoutchouc contenant au moins un caoutchouc diène, au moins un silicate en feuillets et d'autres additifs usuels,
**caractérisé en ce que**
1 à 100 phr (parties en poids par rapport à 100 parties en poids de la totalité des composants de caoutchouc) d'au moins un silicate en feuillets, qui est modifié avec des ions alkylammonium de formule générale ⁺NR¹R²R³R⁴, sont mélangées lors de la préparation du mélange de caoutchouc, sans que d'autres molécules hôtes soient expansées ou intégrées par polymérisation entre les feuillets de silicate par un traitement préalable,
dans laquelle R¹, R², R³ et R⁴ peuvent être identiques ou différents et peuvent être sélectionnés parmi le groupe constitué de l'hydrogène, des groupes alkyle saturés ou insaturés, substitués ou non substitués, ayant 1 à 40 atomes de carbone avec ou sans ramification et qui peuvent présenter des ponts éther et/ou sulfure, et des groupes aryle et benzyle substitués ou non substitués, et au moins un R parmi R¹, R² R³ et R⁴ présentant au moins deux atomes de carbone et un groupe hydroxyle terminal.

2. Procédé selon la revendication 1, **caractérisé en ce que** 5 à 30 phr du silicate en feuillets sont mélangées.

3. Procédé selon la revendication 1 ou 2, **caractérisé en ce que** le mélange de caoutchouc contient de la suie et/ou de l'acide silicique en plus du silicate en feuillets, en tant que matières de charge supplémentaires.

4. Procédé selon au moins l'une des revendications 1 à 3, **caractérisé en ce que** la partie du silicate en feuillets par rapport à la partie totale de matière de charge est de 15 à 30 %.

5. Procédé selon au moins l'une des revendications 1 à 4, **caractérisé en ce que** le silicate en feuillets est constitué de particules primaires qui présentent à l'état exfolié une forme de plaquettes avec une épaisseur de 0,8 à 2,0 nm et un diamètre superficiel moyen de 80 à 800 nm.

6. Procédé selon au moins l'une des revendications 1 à 5, **caractérisé en ce que** le silicate en feuillets modifié présente une teneur en carbone de 8 à 50 % en poids.

7. Procédé selon au moins l'une des revendications 1 à 6, **caractérisé en ce que** le radical R ayant le groupe hydroxyle terminal est un groupe -(CH₂-CH₂-O)ₙH avec n = 1 à 20, en particulier avec n = 2.

8. Procédé selon la revendication 7, **caractérisé en ce que** R¹ et R² sont identiques à -(CH₂-CH₂-O)₂H, R³ est de l'hydrogène et R⁴ est un groupe alkyle saturé, non ramifié et non substitué ayant 8 à 22, en particulier 18, atomes de carbone.

9. Procédé selon au moins l'une des revendications 1 à 8, **caractérisé en ce que** le caoutchouc diène ou les caoutchoucs diène est ou sont sélectionnés parmi le groupe constitué du caoutchouc naturel, du polyisoprène synthétique, du polybutadiène, du copolymère styrène-butadiène, du caoutchouc isoprène-butadiène, du caoutchouc styrène-isoprène-butadiène et du caoutchouc chloroprène.

10. Procédé selon au moins l'une des revendications 1 à 9, **caractérisé en ce que** le mélange de caoutchouc contient au moins un agent de couplage au silane pour la fixation du silicate en feuillets au caoutchouc.

11. Mélange de caoutchouc, en particulier pour des bandes de roulement de pneus ou des amortisseurs pneumatiques, qui est fabriqué suivant le procédé selon au moins l'une des revendications 1 à 10.

12. Pneus pour véhicule, dont la bande de roulement est constituée au moins pour partie d'un mélange de caoutchouc vulcanisé avec du soufre selon la revendication 11.

13. Amortisseur pneumatique, qui est constitué au moins pour partie d'un mélange de caoutchouc vulcanisé selon la revendication 11.
